# EUROPÄISCHE PATENTSCHRIFT

(11) **EP 4 474 260 B1**
(45) Veröffentlichungstag und Bekanntmachung des Hinweises auf die Patenterteilung: **23.07.2025**
(21) Anmeldenummer: 23177580.0
(22) Anmeldetag: 06.06.2023
(51) Int. Cl.: G01P 3/481, G01P 3/487, G01P 3/488, B62J 45/413, B62J 45/423, B62K 25/02, G01D 5/244, G01D 5/20

(54) **PULSRAD**
PULSE WHEEL
ROUE À IMPULSIONS

(43) Veröffentlichungstag der Anmeldung: 11.12.2024
(73) Patentinhaber: K.W.H. Ciclosport Vertriebs GmbH, 82152 Krailling (DE)
(72) Erfinder: Becker, Christian, 82152 Krailling (DE); Jahnen, Georg, 82152 Krailling (DE)
(74) Vertreter: Wunderlich & Heim Patentanwälte PartG mbB

(56) Entgegenhaltungen:
- EP-A1- 3 178 733
- FR-A1- 2 583 514
- US-A- 3 317 829
- US-A- 3 716 787

## Beschreibung

Die Erfindung betrifft ein Pulsrad für eine Umdrehungs- oder Rotationsmessung eines Rades eines Fahrrades. Hierbei weist das Rad eine am Fahrradrahmen fixierbare Radachse und eine daran drehbare Nabe mit daran fixierten Radspeichen und eine mit der Nabe fest verbundene Bremsscheibe auf. Das Pulsrad ist - im angebauten Zustand - zwischen der Bremsscheibe und dem Fahrradrahmen drehfest zur Nabe angebracht.

Bei den gängigsten Verfahren zum Ermitteln der Geschwindigkeit eines Fahrrades wird ein kleiner Magnet am Speichenrad des Fahrrads befestigt. Der Magnet befindet sich normalerweise in der Nähe der Nabe, und ist so platziert, dass er bei jeder Umdrehung des Rads an einem Sensor vorbeifährt. Der Sensor wird am Rahmen oder an der Gabel des Fahrrads montiert und erfasst das Passieren des Magneten.

Der Sensor besteht aus einem magnetischen Sensor, der das Signal erkennt, wenn der Magnet vorbeifährt. Jedes Mal, wenn der Magnet am Sensor vorbeigleitet, wird ein elektrisches Signal erzeugt. Dieses Signal wird dann an den Fahrradcomputer oder den Geschwindigkeitssensor gesendet.

Der Fahrradcomputer oder der Geschwindigkeitssensor zählt die Anzahl der Signale, die der Sensor in einem bestimmten Zeitintervall empfängt. Durch die Kombination der Anzahl der Signale mit dem bekannten Umfang des Rads kann die Geschwindigkeit berechnet werden. Einige Fahrradcomputer zeigen die Geschwindigkeit kontinuierlich an, während andere die Geschwindigkeit in regelmäßigen Intervallen aktualisieren.

Es ist wichtig, dass der Sensor richtig ausgerichtet und der Abstand zwischen dem Magnet und dem Sensor angemessen ist, um zuverlässige Ergebnisse zu erzielen. Ein zu großer Abstand oder eine falsche Ausrichtung kann zu ungenauen Messungen führen.

Gerade im Bereich von Elektrofahrrädern wird mittlerweile davon abgewichen, lediglich einen Magneten zur Detektion einer Umdrehung des Rades zu verwenden, da aufgrund gesetzlicher Vorgaben zur Motorunterstützung eine höhere Genauigkeit und Manipulationssicherheit zur Geschwindigkeitsermittlung eingefordert wird. Aus diesem Grund werden Pulsräder eingesetzt, welche zusammen mit entsprechenden Sensoren derart ausgebildet sind, dass sie mehrere Impulse pro Umdrehung des Rades erzeugen.

Hierbei ist zu berücksichtigen, dass gerade bei Straßenfahrrädern und insbesondere bei Rennrädern nur ein sehr geringer Montageraum und eine geringe Einbaubreite sowie -höhe zur Verfügung stehen, um das Pulsrad und die zugehörige Auswerte- oder Messeinrichtung anzubringen. Es ist auch zu beachten, dass das Rad selbst oft mittels einer Schnellbefestigung entfernt werden können soll.

Aus der US 3 317 829 A ist eine Anordnung zum Umwandeln einer Drehgeschwindigkeit in eine elektrische Spannung oder einen elektrischen Strom bekannt, die ein Impulsrad aufweist, das drehbar ist und das mit seinem Umfang einem stationären Hallsensor gegenüberliegt. Das Impulsrad besteht aus einem nicht-magnetisierbaren Material wie Aluminium, Messing oder einem Isoliermaterial und hat eine Anzahl von beispielsweise 100 kleinen Permanentmagneten oder Elementen aus magnetisierbarem Material, die um den Umfang des Rades regelmäßig verteilt und in dieses eingebettet sind. Das drehende Impulsrad erzeugt in dem Hallsensor eine Spannung mit einer zur Drehgeschwindigkeit und Anzahl der Magnete proportionalen Frequenz.

Aus der US 3 716 787 A ist ein Bewegungsdetektorsystem unter Verwendung eines Impulstachometers bekannt, das ein Rad aus nichtmagnetischem, nichtleitendem Material, wie z.B. Fasern oder Teflon, mit einer Vielzahl von gleichmäßig beabstandeten, magnetisch getrennten Stiften in der Peripherie aufweist, die sich in die Nähe einer Aufnahmespule eines abgestimmten Schaltkreises bewegen, um die Impedanz in diesem zu verändern. Die Veränderung der Impedanz bewirkt eine Phasenverschiebung des Schaltkreises, die mit einer vorbestimmten Referenzphase von Spannung und Strom in dem Schaltkreis verglichen wird, um einen Hinweis auf eine Bewegung des Rades und eine Messung der Geschwindigkeit der Bewegung in einem gemessenen Zeitintervall zu liefern.

Aus der FR 2 583 514 A1 ist eine Anordnung zur Messung von Drehbewegungen bekannt, die aus einem beweglichen Element, das mit einem drehbaren Teil verbunden ist, und einem feststehenden Hall-Sensor besteht. Der Hall-Sensor liefert ein elektrisches Signal, das von einem Magnetfeld abhängt, das von magnetisierten oder magnetischen Zonen erzeugt oder gestört wird, die zwischen unmagnetischen oder sehr schwach magnetischen Zonen eingefügt sind, die gegenüber dem Sensor auf einer Oberfläche des beweglichen Elements angeordnet sind. Die magnetisierten oder magnetischen Bereiche sind durch Einspritzen eines mit magnetisierbaren Partikeln beladenen Kunststoffmaterials in zuvor in das bewegliche Element eingebrachte Aufnahmen oder Kerben hergestellt.

Die EP 3 178 733 A1 offenbart eine Radeinheit für ein Fahrrad umfassend eine Nabe und eine Felge, welche um eine Drehachse drehbar beweglich angeordnet ist, wobei die Nabe und die Felge durch Speichen miteinander verbunden sind. An der Nabe sind eine Bremsscheibe und ein Sensorkranz, welcher einen Abtastbereich mit einer in Umlaufrichtung periodisch variierenden, drehsymmetrischen gezahnten Struktur umfasst, welche eine magnetfeldbeeinflussende Wirkung hat, die mit einem dem Abtastbereich zugewandten Hall-Sensor detektierbar ist, so angeordnet, dass der Abtastbereich zwischen der Bremsscheibe und den Speichen positioniert ist. Der Sensorkranz ist dabei über Haltestege ähnlich den Tragstegen einer Bremsscheibe mit 6 Bolzen an der Nabe befestigt. Die Drehgeschwindigkeit wird aus der zeitlichen Veränderung der magnetfeldbeeinflussenden Wirkung ermittelt.

Der Erfindung liegt daher die **Aufgabe** zugrunde, ein Pulsrad anzugeben, welches platzsparend anbringbar ist und eine platzsparende Montage einer Messeinrichtung ermöglicht.

Diese Aufgabe wird erfindungsgemäß durch ein Pulsrad mit den Merkmalen des Anspruchs 1 gelöst.

Weitere vorteilhafte Ausführungsformen sind in den abhängigen Ansprüchen, der Beschreibung sowie in den Figuren und deren Beschreibung angegeben.

Entsprechend Anspruch 1 ist ein gattungsgemäßes Pulsrad dadurch weitergebildet, dass das Pulsrad zwei unterschiedliche Materialien aufweist, wobei das erste Material ausgelegt ist, keinen Einfluss auf die Messeinrichtung zum Ermitteln der Umdrehungen auszuüben und wobei das zweite Material ausgebildet ist, Einfluss auf die Messeinrichtung zum Ermitteln der Umdrehungen auszuüben.

Das Pulsrad selbst ist rad- oder scheibenartig ausgeformt und hat eine Breite oder Dicke, einen Radius und einen Umfang. Auf dem Umfang des Pulsrades sind Bereiche mit dem ersten Material und Bereiche mit dem zweiten Material jeweils alternierend zueinander ausgebildet. Umfang kann in diesem Zusammenhang auch als Umfangsfläche definiert durch den geometrischen Umfang und die Breite des Pulsrades verstanden werden.

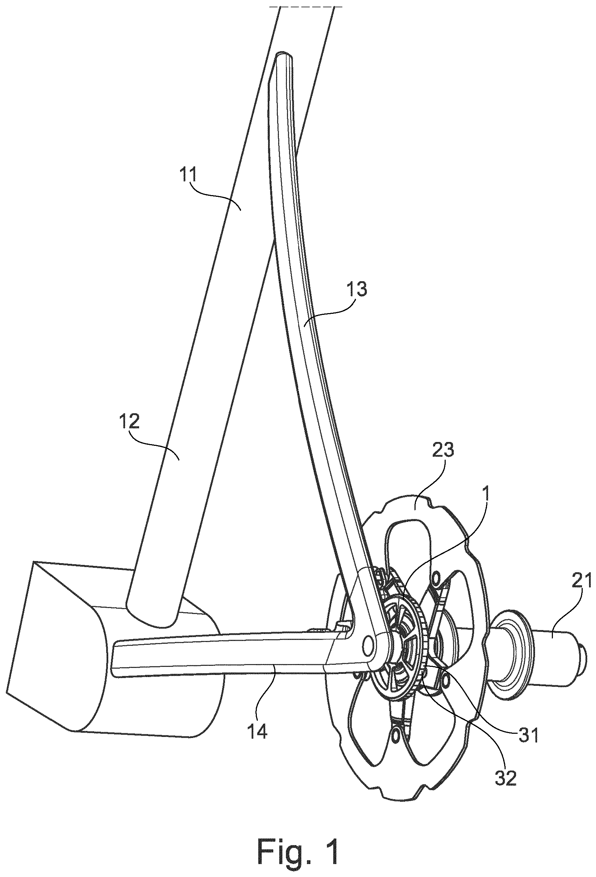

Entsprechend der Erfindung wurde erkannt, dass es gerade im Hinblick auf eine platzsparende Montage der Messeinrichtung vorteilhaft ist, eine Auswertung, Signalermittlung oder -erzeugung, nicht über den Radius beziehungsweise die Seitenfläche des Pulsrades durchzuführen, sondern über den Umfangsbereich. Hierdurch wird, wie insbesondere in Fig. 1 sichtbar, eine Montage der Messeinrichtung möglich, die nicht ebenfalls entlang der Achse des Rades ausgerichtet ist. Mit dem erfindungsgemäßen Pulsrad kann die Messeinrichtung radial zum Pulsrad, also in derselben Ebene, platziert werden. Dies verringert den Platzbedarf in axialer Richtung der Nabe deutlich.

Das Vorsehen von zwei unterschiedlichen Materialien bietet außerdem den Vorteil, dass gezielt Impulse in der Messeinrichtung erzeugt beziehungsweise von dieser gemessen werden können. Hierdurch kann die Anzahl der Signaländerungen bei einer Umdrehung das Rades und damit des Pulsrades festgelegt werden. Dies beeinflusst die Auflösung der Messeinrichtung.

Erfindungsgemäß kann das Pulsrad indirekt drehfest an der Nabe befestigt werden, indem das Pulsrad ausgebildet ist, um eine standardmäßig vorgesehene Befestigungsmöglichkeit gängiger Bremsscheiben zur Befestigung zu verwenden. Dabei handelt es sich erfindungsgemäß um eine internal Centerlock- oder eine external Centerlock-Befestigung.

Vorteilhaft ist es, wenn als erstes Material ein nicht leitendes Material verwendet wird, welches bei einer eingesetzten Messeinrichtung, bei der es sich beispielsweise um einen Hall-Sensor oder um einen Schwingkreis handeln kann, keine oder keine Wesentliche Signalveränderungen auslöst. Insbesondere ist es vorteilhaft, wenn ein elektrisch nicht-leitender Kunststoff verwendet wird. Grundsätzlich sind jedoch auch andere Materialien geeignet, die auf gängige Messeinrichtungen, die auf magnetische, elektromagnetischen oder elektrischen Feldtechnologien basieren, keinen Einfluss haben.

Als zweites Material kann ein elektrisch leitendes Material verwendet werden, welches auch ferromagnetisch ausgebildet sein kann. Es kann sich beispielsweise um ein metallisches Material oder einen leitenden Kunststoff handeln. Dies bietet sich insbesondere an, wenn die Messeinrichtung in Verbindung mit einem Schwingkreis arbeitet, der durch das metallische Material beeinflusst wird. Wird ein klassischer Hall-Sensor verwendet, so kann das zweite Material auch ein magnetisches Material sein, welches zum Erzeugen von Impulsen im Hall-Sensor eingesetzt wird.

Es hat sich als vorteilhaft herausgestellt, dass die Bereiche mit dem ersten Material und die Bereiche mit dem zweiten Material auf dem Umfang im Wesentlichen jeweils gleich groß ausgebildet sind. Generell ist dies jedoch nicht erforderlich. Die exakte Ausbildung hängt insbesondere vom gewählten Detektionsprinzip der Messeinrichtung und deren Detektionssensibilität ab.

Besonders gute Ergebnisse zur Detektion wurde erreicht, wenn die Bereiche mit dem ersten Material und die Bereiche mit dem zweiten Material auf dem Umfang im Wesentlichen gleichmäßig verteilt sind. Anders ausgedrückt kann ein regelmäßiger Wechsel zwischen den beiden Materialien stattfinden. Es ist jedoch auch denkbar, die Materialien bewusst ungleichmäßig auf dem Umfang des Pulsrades vorzusehen, um zusätzliche Informationen zur Rotation zu ermitteln. So kann beispielsweise ein sich wiederholendes Signalmuster aufgeprägt werden. Dies kann insbesondere vorteilhaft sein, um Manipulationen festzustellen, da die so empfangenen manipulierten Signale dann unter Umständen abweichend zu den ursprünglich ausgeprägten Signalen sind.

Für eine hochgenaue Auflösung hat es sich als besonders praktikabel herausgestellt, dass auf dem Umfang mindestens je 20 Bereiche mit dem ersten und je 20 Bereiche mit dem zweiten Material vorgesehen sein sollten. Hierdurch wird eine im Vergleich zu einem klassischen Sensor sehr hohe Auflösung ermöglicht. Die Anzahl der Bereich wird durch die Anwendung vorgegeben. Um beispielsweise eine Messung für eine Schiebehilfe eines E-Bikes oder Pedelecs durchzuführen sind erfahrungsgemäß bereits je 20 Bereiche ausreichend. Zur Steuerung bestimmter Fahrparameter sollten es jedoch mindestens 40 jeder Art sein.

In einer bevorzugten Ausführungsform besteht das Pulsrad hauptsächliche aus dem ersten Material, welches keinen Einfluss auf die Mess- oder Detektionseinrichtung hat. Auf diese Weise wird von herkömmlichen Pulsrädern abgewichen, die meist aus einem Material mit Luftspalten ausgebildet sind. Hierzu wird betont, dass es sich bei dem zweiten Material nicht um Luft, sondern um ein festes Medium handeln kann. Durch das Vorsehen des Hauptkörpers des Pulsrades aus dem ersten Material, welches keine Signale in der Detektionseinrichtung erzeugt, kann durch das gezielte Aufbringen des zweiten Materials ein deutliches und klares Signal erzeugt werden, welches wiederum die Detektionseigenschaften deutlich verbessert.

Der Hauptkörper des Pulsrades kann beispielsweise durch ein Spritzgussverfahren hergestellt werden. Grundsätzlich sind jedoch auch andere Herstellungsverfahren, die sich beispielsweise für Kunststoff eignen, möglich. Auf dem Umfang des Hauptkörper des Pulsrades können Bereiche, insbesondere Vertiefungen, für das zweite Material vorgesehen sein. In diese Vertiefungen kann das zweite Material dann eingelegt, insbesondere eingeklebt, werden. Es ist jedoch auch ein formschlüssiger Presssitz oder dergleichen möglich.

Allgemein kann das Pulsrad in Form einer, insbesondere breiteren Scheibe, ausgebildet sein. In ähnlicher Weise ist es auch möglich, das Pulsrad selbst radähnlich auszuführen, mit einer Verstärkung im Umfangsbereich sowie speichenartigen Verlängerungen in Richtung des Zentrums des Pulsrades. Grundsätzlich sollte das Gewicht des Pulsrades möglichst gering sein, um keinen oder einen zu vernachlässigenden Einfluss auf die Rotation des Rades auszuüben.

Die Größe des Pulsrades kann prinzipiell beliebig sein. Vorteilhaft ist es jedoch, wenn das Pulsrad einen Durchmesser aufweist, der mindestens doppelt so groß wie der Durchmesser der Nabe ist. Als maximale Größe ist es bevorzugt, wenn der Durchmesser des Pulsrades kleiner, insbesondere halb so klein wie der Durchmesser der an der Nabe ebenfalls vorgesehen Bremsscheibe ist. Der Durchmesser des Pulsrades kann so beispielsweise zwischen 20 mm und 70 mm liegen.

Eine derartige Dimension hat sich als effizienter Mittelwert herausgestellt, da je größer das Pulsrad ist, eine desto bessere Auflösung der Signale vorliegt, jedoch auch mehr Platz beansprucht wird. Insbesondere das Ausbilden das Pulsrades kleiner als die Bremsscheibe ermöglicht es, dass das Pulsrad sowie die darauf abgestimmte Mess- oder Detektionseinrichtung nicht mit der Bremsscheibe und mit dem Bremssattel platzmäßig konkurriert, so dass ausreichend hohe Freiheitsgrade zum Einbau des Pulsrades vorhanden sind.

Ferner betrifft die Erfindung einen Sensor mit einer Messeinrichtung und einem Pulsrad wie zuvor beschrieben. Hierbei kann die Messeinrichtung ausgebildet sein, den Wechsel zwischen Bereichen mit dem ersten Material und Bereichen mit dem zweiten Material zu detektieren beziehungsweise die Anwesenheit und die Abwesenheit des zweiten Materials zu detektieren. Die Messeinrichtung selbst ist derart an dem Fahrrad anbringbar, dass sie auf die Fläche des Umfangs des Pulsrades ausgerichtet ist. Eine Anbringung kann hierbei beispielsweise an einer Fahrradgabel oder einer Strebe, wie der Sattelstrebe oder Kettenstrebe, erfolgen. Hierbei kann der Hauptkörper der Messeinrichtung ebenfalls zwischen der Bremsscheibe und dem Rahmen platziert sein.

Die Erfindung wird nachfolgend anhand von Ausführungsbeispielen und schematischen Zeichnungen näher erläutert. In diesen Zeichnungen zeigen:
- Fig. 1: einen stark schematisierten hinteren Bereich eines Fahrrades;
- Fig. 2: eine Vergrößerung des zentralen Bereiches aus Fig. 1 um die Nabe; und
- Figuren 3 bis 5: unterschiedliche Ausführungen eines Pulsrades.

In Fig. 1 ist der stark vereinfachte hintere Bereich eines Fahrrades gezeigt. Der hier dargestellte Fahrradrahmen 11 besteht im Wesentlichen aus einem Sattelrohr 12 und stark schematisierten Sattel- 13 und Kettenstreben 14, wobei jeweils der zweite Teil der Streben aus Übersichtlichkeitsgründen weggelassen wurde. Die Kettenstreben 14 werden auch als Unterstrebe bezeichnet.

Am Fahrradrahmen 11 ist ein Rad mit seiner Nabe 21 befestigt, wobei aus Gründen der Übersichtlichkeit weitere Bauteile des Rades, wie Felgen, Karkasse oder Reifen, nicht dargestellt sind. An der Nabe 21 ist eine Bremsscheibe 23 befestigt.

Zwischen der Bremsscheibe 23 und dem Fahrradrahmen 11 ist ein erfindungsgemäßes Pulsrad 1 vorgesehen. Dieses ist in der hier gezeigten Ausführungsform aus zwei unterschiedlichen Materialien aufgebaut. Als Hauptmaterial kann ein Material verwendet werden, welches keinen Einfluss auf eine Messeinrichtung 40 hat, die zum Detektieren der Umdrehungen des Pulsrades 1 verwendet wird.

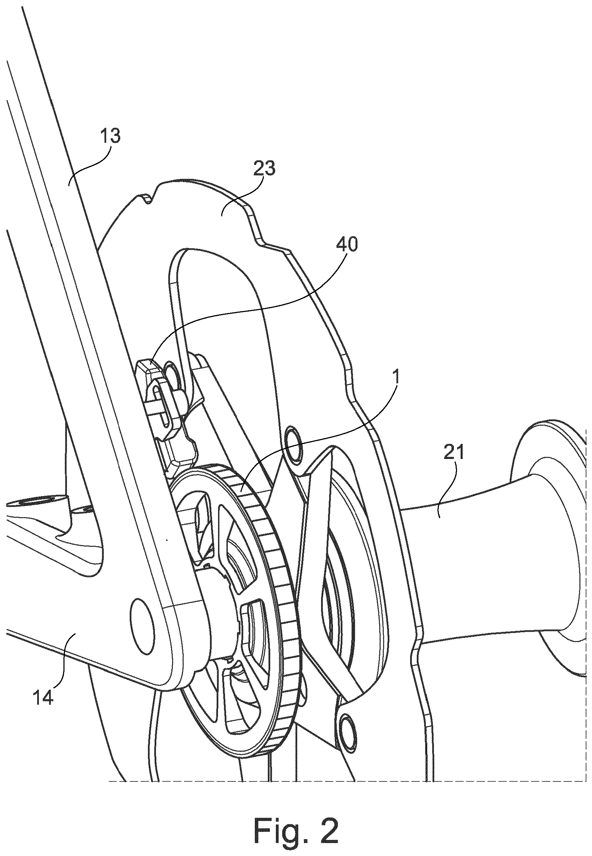

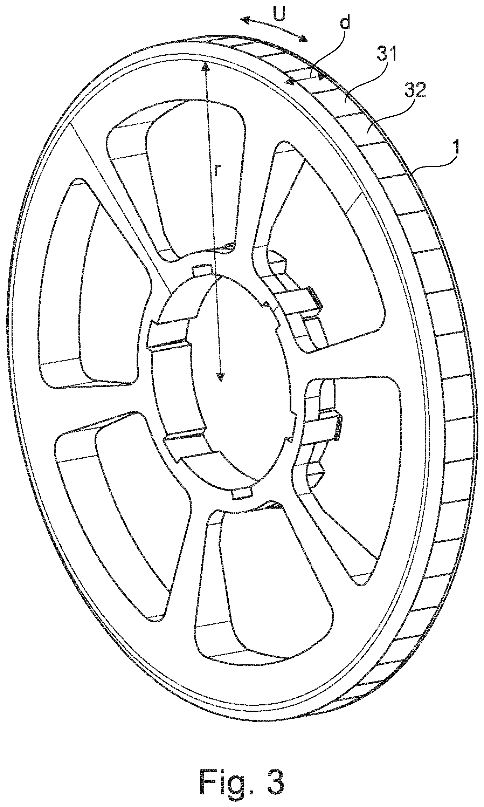

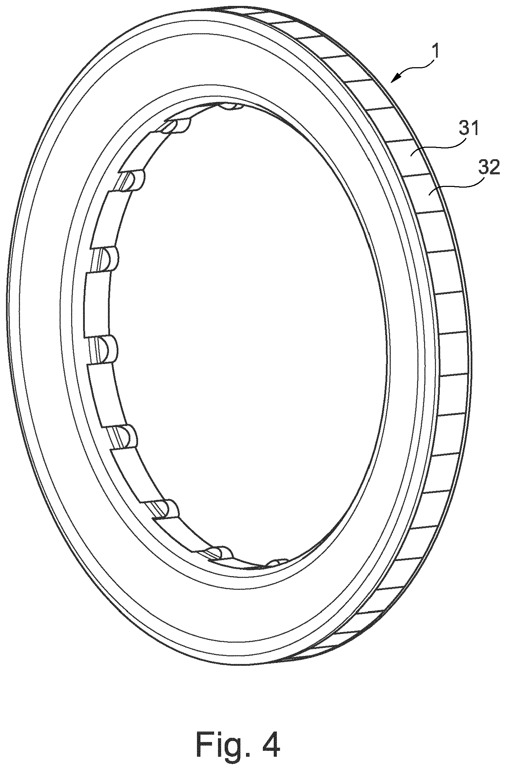

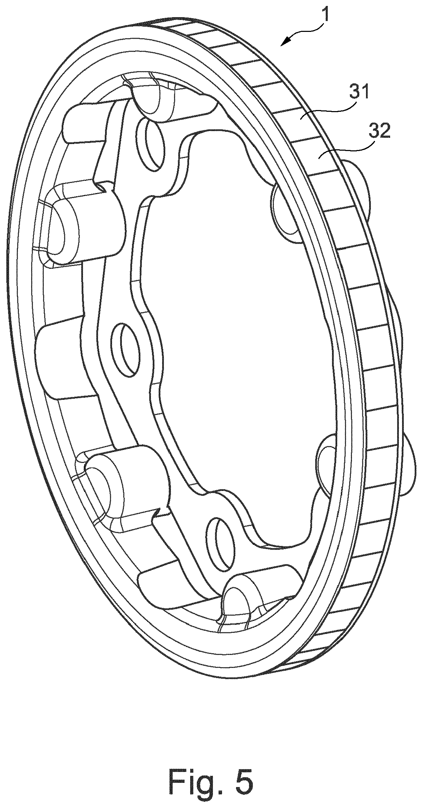

Das in den Figuren 1 und 2 gezeigte Pulsrad 1 ist in Fig. 3 separat dargestellt. Alternative Ausführungen für Pulsräder 1 sind in den Figuren 4 und 5 gezeigt.

Das Pulsrad 1 ist rad- oder scheibenartig ausgebildet und weist einen Umfang U auf, der eine Breite d hat. Auf der Umfangsfläche sind zwei unterschiedliche Materialien 31, 32 angeordnet. Bei dem Material 31 kann es sich auch um das Hauptmaterial des Pulsrades 1 handelt. Das Material 32 wird bevorzugt so gewählt, dass es einen Einfluss auf die Messeinrichtung 40 ausübt, wohin gegen das Material 31 bevorzugt, gewählt wird, dass es keinen oder keinen wesentlichen Einfluss ausübt.

Anders ausgedrückt wird das Material 32 so ausgewählt, dass es beispielsweise magnetisch ist, sofern die Messeinrichtung 40 das Vorhandensein eines Magnetfeldes detektiert. Werden andere Messprinzipien, beispielsweise Schwingkreise und deren Beeinflussung gewählt, reicht auch ein metallisches Material für das Material 32 aus. Es kann aber auch ein optisches Messprinzip verwendet werden, bei dem beispielsweise Unterschiede zwischen hell und dunkel oder Reflektion und Nicht-Reflektion ausgewertet werden.

Grundsätzlich ist es für die Erfindung vorteilhaft, wenn die beiden Materialen 31, 32 unterschiedlich sind und damit die Messeinreichung 40 unterschiedlich beeinflussen oder dort unterschiedliche Signale erzeugen. Hierdurch kann erkannt oder analysiert werden, ob sich gerade ein Bereich mit dem ersten 31 oder zweiten Material 32 gegenüber der Messeinreichung 40 befindet.

Wie insbesondere in Fig. 2 ersichtlich ist, ist die Messeinrichtung 40 ebenfalls am Fahrradrahmen 11, in diesem Fall an der Sattelstrebe 13, befestigt. Sie kann aber grundsätzlich auch an der Kettenstrebe 14 oder einer anderen Stelle vorgesehen sein.

Die Messeinrichtung 40 ist so ausgelegt, dass sie gegenüber der Umfangsfläche des Pulsrades 1 platziert ist. Anders ausgedrückt ist die Sensorfläche oder der Sensorbereich der Messeinrichtung 40 gegenüberliegend der Umfangsoberfläche des Pulsrades 1 vorgesehen.

Wie insbesondere aus Fig. 2 zu entnehmen ist, kann durch eine derartige Kombination des erfindungsgemäßen Pulsrades 1 mit der Platzierung der Messeinrichtung 40 eine platzsparende Positionierung erreicht werden.

In den Figuren 3 und 4 sind verschiedene Ausführungen eines erfindungsgemäßen Pulsrades 1 für unterschiedliche Befestigungstypen vorgesehen. Die Ausführung nach Fig. 3 eignet sich für eine interne Center-Lock-Befestigung, die Ausführung nach Fig. 4 für eine externe Center-Lock-Befestigung. Fig. 5 ist für eine Befestigung an der Bremsscheibe 23 mit sechs Schrauben vorgesehen (nicht erfindungsgemäß). Wesentlich für die Erfindung ist hierbei nicht die exakte Form des Pulsrades, sondern, dass sich auf dessen Umfangsbereich Areale mit unterschiedlichen Materialien abwechseln.

Grundsätzlich kann die Befestigung des Pulsrades 1 jedoch auch anders ausgeführt sein. Wesentlich ist hierbei, dass des Pulsrad 1 drehfest an der Nabe 21 beziehungsweise indirekt über die Bremsscheibe 23 an der Nabe 21 befestigt ist, so dass zuverlässig eine Rotation der Nabe 21 und damit des Rades auf das Pulsrad 1 übertragen werden kann.

## Patentansprüche

1. Pulsrad (1) für eine Umdrehungsmessung eines Rades eines Fahrrades,
wobei das Rad eine an einem Fahrradrahmen (11) des Fahrrads fixierbare Radachse und eine daran drehbare Nabe (21) mit daran fixierten Radspeichen und eine mit der Nabe (21) fest verbundene Bremsscheibe (23) aufweist,
wobei das Pulsrad (1) zwei unterschiedliche Materialen (31,32) aufweist, wobei ein erstes Material (31) ausgelegt ist, um keinen Einfluss auf eine Messeinrichtung (40) zum Ermitteln der Umdrehungen des Pulsrades (1) auszuüben, und wobei ein zweites Material (32) ausgelegt ist, um Einfluss auf die Messeinrichtung (40) auszuüben, und
wobei das Pulsrad (1) rad- oder scheibenartig, mit einer Breite (d), einem Radius (r) und einem Umfang (U), ausgebildet ist, wobei auf dem Umfang (U) Bereiche mit dem ersten Material (31) und Bereiche mit dem zweiten Material (32) jeweils alternierend zueinander angeordnet sind,
**dadurch gekennzeichnet,**
**dass** das Pulsrad (1) ausgebildet ist, um indirekt drehfest an der Nabe (21) mittels einer internal Centerlock-Befestigung oder einer external Centerlock-Befestigung der Bremsscheibe (23) befestigt zu werden, so dass das Pulsrad (1) im angebauten Zustand zwischen der Bremsscheibe (23) und dem Fahrradrahmen (11) drehfest zur Nabe (21) angebracht ist.

2. Pulsrad (1) nach Anspruch 1,
**dadurch gekennzeichnet,**
**dass** das erste Material (31) ein nicht-leitendes-Material ist.

3. Pulsrad (1) nach Anspruch 1 oder 2,
**dadurch gekennzeichnet,**
**dass** das zweite Material (32) ein elektrisch leitendes Material ist.

4. Pulsrad (1) nach einem der Ansprüche 1 bis 3,
**dadurch gekennzeichnet,**
**dass** das zweite Material (32) ein ferromagnetisches Material ist.

5. Pulsrad (1) nach einem der Ansprüche 1 bis 4,
**dadurch gekennzeichnet,**
**dass** das zweite Material (32) ein magnetisches Material ist.

6. Pulsrad (1) nach einem der Ansprüche 1 bis 5,
**dadurch gekennzeichnet,**
**dass** die Bereiche mit dem ersten Material (31) und die Bereiche mit dem zweiten Material (32) auf dem Umfang (U) im Wesentlichen jeweils gleich groß sind.

7. Pulsrad (1) nach einem der Ansprüche 1 bis 6,
**dadurch gekennzeichnet,**
**dass** die Bereiche mit dem ersten Material (31) und die Bereiche mit dem zweiten Material (32) auf dem Umfang (U) gleichmäßig verteilt sind.

8. Pulsrad (1) nach einem der Ansprüche 1 bis 6,
**dadurch gekennzeichnet,**
**dass** die Bereiche mit dem ersten Material (31) und die Bereiche mit dem zweiten Material (32) auf dem Umfang (U) ungleichmäßig verteilt sind.

9. Pulsrad (1) nach einem der Ansprüche 1 bis 8,
**dadurch gekennzeichnet,**
**dass** auf dem Umfang (U) mindestens je 20 Bereiche mit dem ersten (31) und dem zweiten Material (32) angeordnet sind.

10. Pulsrad (1) nach einem der Ansprüche 1 bis 9,
**dadurch gekennzeichnet,**
**dass** das Pulsrad (1) hauptsächlich aus dem ersten Material (31) besteht.

11. Pulsrad (1) nach einem der Ansprüche 1 bis 10,
**dadurch gekennzeichnet,**
**dass** ein Hauptkörper des Pulsrades (1) durch ein Spritzgussverfahren hergestellt ist, wobei die Bereiche für das zweite Material (32) als Vertiefungen auf dem Umfang vorgesehen sind und
**dass** zweite Material (32) in diese Vertiefungen eingelegt, insbesondere eingeklebt, ist.

12. Pulsrad (1) nach einem der Ansprüche 1 bis 11,
**dadurch gekennzeichnet,**
**dass** das Pulsrad (1) eine ringartige Verstärkung im Umfangsbereich aufweist.

13. Pulsrad (1) nach einem der Ansprüche 1 bis 12,
**dadurch gekennzeichnet,**
**dass** das Pulsrad (1) einen Durchmesser aufweist, der mindestens doppelt so groß wie der Durchmesser der Nabe (21) ist.

14. Pulsrad (1) nach einem der Ansprüche 1 bis 13,
**dadurch gekennzeichnet,**
**dass** das Pulsrad (1) einen Durchmesser aufweist, der kleiner, insbesondere halb so klein, wie der Durchmesser der Bremsscheibe (23) ist.

15. Sensor mit einer Messeinrichtung (40) und einem Pulsrad (1) nach einem der Ansprüche 1 bis 14,
wobei die Messeinrichtung (40) ausgebildet ist, um den Wechsel zwischen Bereichen mit dem ersten Material (31) und Bereichen mit dem zweiten Material (32) zu detektieren, und auf die Fläche des Umfangs (U) des Pulsrades (1) ausgerichtet ist.

## Claims

1. Pulse wheel (1) for a measurement of the revolution of a bicycle wheel,
wherein the wheel comprises a wheel axle that can be fixed to the bicycle frame (11) of the bicycle and a rotatable hub (21) thereto with wheel spokes fixed thereto and a brake disc (23) firmly connected to the hub (21),
wherein the pulse wheel (1) comprises two different materials, wherein a first material (31) is configured not to exert any influence on a measuring device (40) for determining the revolutions of the pulse wheel (1), and wherein a second material (32) is configured to exert an influence on the measuring device (40), and wherein the pulse wheel (1) is configured like a wheel or disc, with a radius (r) and a circumference (U), wherein areas with the first material (31) and areas with the second material (32) are respectively arranged alternately to one another on the circumference (U),
**characterized in that**
the pulse wheel (1) is configured to be attached indirectly torque proof to the hub (21) by means of an internal Centerlock-mounting or an external Centerlock-mounting of the brake disc (23) so that the pulse wheel (1) in the mounted state is mounted between the brake disc (23) and the bicycle frame (11) so that it is torque proof in relation to the hub (21),

2. Pulse wheel (1) according to claim 1,
**characterized in that**
the first material (31) is a non-conductive material.

3. Pulse wheel (1) according to claim 1 or 2,
**characterized in that**
the second material (32) is an electrically conductive material.

4. Pulse wheel (1) according to any one of claims 1 to 3,
**characterized in that**
the second material (32) is a ferromagnetic material.

5. Pulse wheel (1) according to any one of claims 1 to 4,
**characterized in that**
the second material (32) is a magnetic material.

6. Pulse wheel (1) according to any one of claims 1 to 5,
**characterized in that**
the areas with the first material (31) and the areas with the second material (32) on the circumference (U) have each substantially the same size.

7. Pulse wheel (1) according to any one of claims 1 to 6,
**characterized in that**
the areas with the first material (31) and the areas with the second material (32) on the circumference (U) are evenly distributed.

8. Pulse wheel (1) according to any one of claims 1 to 6,
**characterized in that**
the areas with the first material (31) and the areas with the second material (32) are unevenly distributed on the circumference (U).

9. Pulse wheel (1) according to any one of claims 1 to 8,
**characterized in that**
at least 20 areas with each of the first (31) and the second material (32) are arranged on the circumference (U).

10. Pulse wheel (1) according to any one of claims 1 to 9,
**characterized in that**
the pulse wheel (1) mainly consists of the first material (31).

11. Pulse wheel (1) according to any one of claims 1 to 10,
**characterized in that**
a main body of the pulse wheel (1) is produced by an injection molding process, wherein the areas for the second material (32) are provided as recesses on the circumference, and
**in that** the second material (32) is inserted, in particular glued into these recesses.

12. Pulse wheel (1) according to any one of claims 1 to 10,
**characterized in that**
the pulse wheel (1) has a ring-like reinforcement in the circumferential area.

13. Pulse wheel (1) according to any one of claims 1 to 12,
**characterized in that**
the pulse wheel (1) has a diameter that is at least twice the size of the diameter of the hub (21).

14. Pulse wheel (1) according to any one of claims 1 to 13,
**characterized in that**
the pulse wheel (1) has a diameter that is smaller, in particular half as small, as the diameter of the brake disc (23).
14.

15. Sensor with a measuring device (40) and a pulse wheel (1) according to any one of claims 1 to 14,
wherein the measuring device (40) is configured to detect the change between areas with the first material (31) and areas with the second material (32), and is aligned with the surface of the circumference (U) of the pulse wheel (1).

## Revendications

1. Roue à impulsions (1) pour une mesure de la rotation d'une roue d'une bicyclette, la roue présentant un axe de roue pouvant être fixé sur un cadre de bicyclette (11) de la bicyclette et un moyeu (21) pouvant tourner sur celui-ci avec des rayons de roue fixés sur celui-ci et un disque de frein (23) relié fixement au moyeu (21),
la roue à impulsions (1) présentant deux matériaux différents (31, 32), un premier matériau (31) étant conçu pour ne pas exercer d'influence sur un appareil de mesure (40) destiné à déterminer les rotations de la roue à impulsions (1), et un deuxième matériau (32) étant conçu pour exercer une influence sur l'appareil de mesure (40), et
la roue pulsée (1) étant réalisée à la manière d'une roue ou d'un disque, avec une largeur (d), un rayon (r) et une circonférence (U), des zones avec le premier matériau (31) et des zones avec le deuxième matériau (32) étant respectivement agencées en alternance sur la circonférence (U), **caractérisée en ce que**
la roue à impulsions (1) est réalisée pour être fixée indirectement de manière solidaire en rotation au moyeu (21) au moyen d'une fixation interne centerlock ou d'une fixation externe centerlock du disque de frein (23), de telle sorte qu'à l'état monté, la roue à impulsions (1) est disposée entre le disque de frein (23) et le cadre de bicyclette (11) de manière solidaire en rotation par rapport au moyeu (21).

2. Roue à impulsions (1) selon la revendication 1,
**caractérisée en ce que**
le premier matériau (31) est un matériau non conducteur.

3. Roue à impulsions (1) selon la revendication 1 ou 2,
**caractérisée en ce que**
le deuxième matériau (32) est un matériau électriquement conducteur.

4. Roue à impulsions (1) selon l'une quelconque des revendications 1 à 3,
**caractérisée en ce que**
le deuxième matériau (32) est un matériau ferromagnétique.

5. Roue à impulsions (1) selon l'une quelconque des revendications 1 à 4,
**caractérisée en ce que**
le deuxième matériau (32) est un matériau magnétique.

6. Roue à impulsions (1) selon l'une quelconque des revendications 1 à 5,
**caractérisée en ce que**
les zones avec le premier matériau (31) et les zones avec le deuxième matériau (32) sont respectivement essentiellement de même taille sur la circonférence (U).

7. Roue à impulsions (1) selon l'une quelconque des revendications 1 à 6, **caractérisée en ce que**
les zones avec le premier matériau (31) et les zones avec le deuxième matériau (32) sont réparties de manière uniforme sur la circonférence (U).

8. Roue à impulsions (1) selon l'une quelconque des revendications 1 à 6, **caractérisée en ce que**
les zones avec le premier matériau (31) et les zones avec le deuxième matériau (32) sont réparties de manière non uniforme sur la circonférence (U).

9. Roue à impulsions (1) selon l'une quelconque des revendications 1 à 8, **caractérisée en ce qu'**
au moins 20 zones avec le premier matériau (31) et 20 zones avec le deuxième matériau (32) sont agencées sur la circonférence (U).

10. Roue à impulsions (1) selon l'une quelconque des revendications 1 à 9, **caractérisée en ce que**
la roue à impulsions (1) est principalement constituée du premier matériau (31).

11. Roue à impulsions (1) selon l'une quelconque des revendications 1 à 10, **caractérisée en ce qu'**
un corps principal de la roue à impulsions (1) est fabriqué par un procédé de moulage par injection, les zones pour le deuxième matériau (32) étant prévues sous forme de cavités sur la circonférence et
**en ce que** le deuxième matériau (32) est inséré, notamment collé, dans ces cavités.

12. Roue à impulsions (1) selon l'une quelconque des revendications 1 à 11, **caractérisée en ce que**
la roue à impulsions (1) présente un renforcement annulaire dans la zone circonférentielle.

13. Roue à impulsions (1) selon l'une quelconque des revendications 1 à 12, **caractérisée en ce que**
la roue à impulsions (1) présente un diamètre au moins deux fois supérieur au diamètre du moyeu (21).

14. Roue à impulsions (1) selon l'une quelconque des revendications 1 à 13, **caractérisée en ce que**
la roue à impulsions (1) présente un diamètre inférieur au diamètre du disque de frein (23), notamment deux fois plus petit que celui-ci.

15. Capteur avec un appareil de mesure (40) et une roue à impulsions (1) selon l'une quelconque des revendications 1 à 14,
l'appareil de mesure (40) étant réalisé pour détecter le changement entre des zones avec le premier matériau (31) et des zones avec le deuxième matériau (32) et étant orienté vers la surface de la circonférence (U) de la roue à impulsions (1).
